# EUROPEAN PATENT APPLICATION

(11) **EP 2 169 557 A1**
(43) Date of publication of application: **31.03.2010**
(21) Application number: 07767301.0
(22) Date of filing: 20.06.2007
(51) Int. Cl.: G06F 12/10, G06F 12/08

(54) **PROCESSOR, TLB CONTROL METHOD, TLB CONTROL PROGRAM, AND INFORMATION PROCESSOR**

(71) Applicant: Fujitsu Limited, Kawasaki-shi, Kanagawa 211-8588 (JP)
(72) Inventor: DOI, Masanori, Kawasaki-shi Kanagawa 211-8588 (JP)
(74) Representative: Wilding, Frances Ward
(86) International application number: PCT/JP2007/062463
(87) International publication number: WO 2008/155849

(57) **Abstract**

An arithmetic processing apparatus includes a main TLB that stores therein, as a page table, entries indicating correspondences between virtual and physical addresses, and a micro TLB that stores therein part of the table. The apparatus associates together the physical address stored in the main TLB, the virtual address associated with the physical address, and a context ID included in an address-translation request and registers these associated together in the micro TLB as an entry. When receiving the request, the apparatus does not translate the context ID included in the request into a context value but searches for an entry matching the virtual address and the context ID included in the request. When the entry is searched for and found, the response is the physical address included in the entry. When the entry is searched for and not found, the request is transmitted to the main TLB.

## Description

### TECHNICAL FIELD

The present invention relates to an arithmetic processing apparatus that includes a main TLB in which a plurality of entries indicating correspondences between virtual addresses and physical addresses is stored as a page table and a micro TLB in which a part of the page table stored in the main TLB is stored, and obtains, from the entries stored in the micro TLB or the main TLB, a physical address indicated in a request, which is output from an arithmetic unit, for translating an address from virtual address to physical address, to respond to the arithmetic unit, and relates to a TLB control method, a TLB control program, and an information processing apparatus.

### BACKGROUND ART

Conventionally, in computers with a virtual storage method, a reference list, known as page table, for translating virtual addresses (VA: Virtual address) into physical addresses (PA: Physical address) are stored in a main storage (i.e., main memory). It takes a long period of time if computers may need to refer to the page tables in the main memory for address translation every time. Therefore, it is common that a cache exclusively used for address translation, known as TLB (Address translation buffer: Translation-Lookasaide buffer) is located in the CPU.

An arithmetic unit and an instruction control unit in a computer use the TLB to translate virtual addresses into physical addresses and directly access to a memory using the physical addresses. Therefore, the TLB access speed is a factor directly affecting the speed of memory access. To quicken the TLB access, the capacity of the TLB preferably needs to be small. However, too small a capacity of the TLB causes TLB misses frequently and impairs performance improvement of hardware. In view of the above, to shorten access time and allow performance improvement of hardware, a method of constructing two-layer TLB is widely adopted.

Such a two-layer TLB includes a CAM (content addressable memory, fully associative TLB) used as a micro TLB, and a RAM (Random Access Memory, Set associative TLB) used as a main TLB. A given size, known as page size, is allocated for each TLB entry, and there are six patterns of sizes: 8 K page, 64 K page, 512 K page, 4 M page, 32 M page, and 256 M page. Of these pages, the RAM can store therein an 8 K page and a 4 M page while the CAM can store the remaining pages and a particular entry, known as LOCK entry. Because of the structure of the RAM, the RAM can register only one kind of page size. Therefore, two RAMs, each for 8 K page and 4 M page entries, are prepared. Although there are strict restrictions on page sizes, the storage capacity of the RAM is large relative to the implementation area.

On the other hand, the CAM can register all page sizes, and entry control can be performed using a LOCK bit in the LOCK entry. However, compared with the RAM, the storage area of the CAM relative to the implementation area is small, and the CAM cannot store many entries. Therefore, the CAM stores therein a 64 K page, 512 K page, 32 M page, and 256 M page that are less frequently used or LOCK entries and global bits that are not suitable for the RAM in terms of reliability. The micro TLB is constructed with the CAM and stores therein information of address translations of past searches, that is, a small amount of information.

Upon address translations in the micro TLB, the arithmetic unit and the instruction control unit in the computer performs a micro-TLB search according to virtual addresses and contexts of a transmitted request, and TLB virtual addresses, TLB contexts, and page-size information registered in the TLB. When the virtual address and context match the TLB virtual address and TLB context, respectively and further when the matching entry is a valid one, i.e., when the micro TLB hit occurs, the arithmetic unit and the instruction control unit perform the conversion into physical addresses. The context used above is an identifier given for programs occupying virtual addresses of processes or address space. In the SPARC architecture, the context is stored in a context register. The context register includes three types of space including primary, secondary, and nucleus, and values are assigned thereto by an OS.

The global bit is used so that the context stored in the context register can be shared among different processes. For the entries with the global bit activated, the arithmetic unit and the instruction control unit can ignore, upon the address search, the matching of the context and perform the address translation based on the matching of the virtual addresses only.

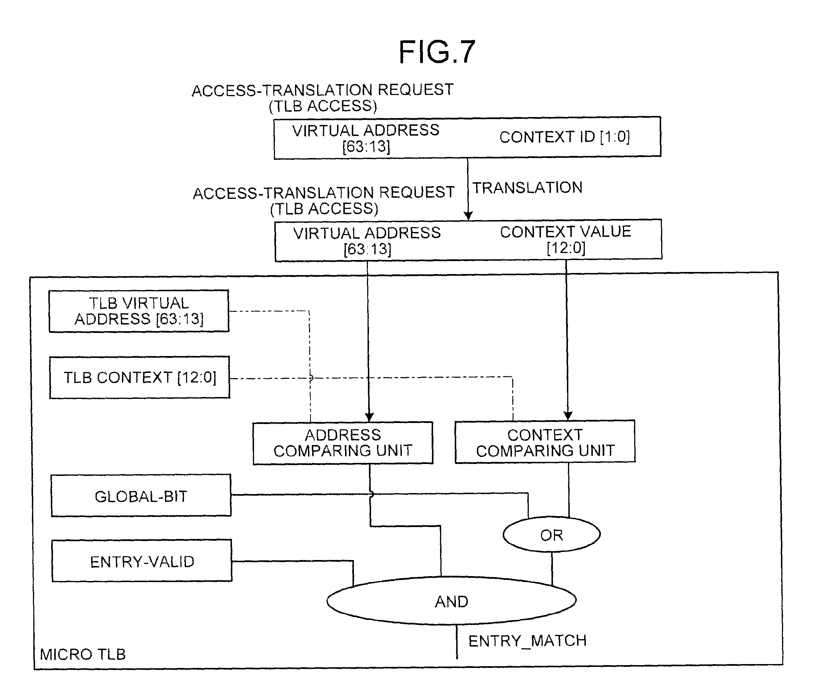

The processes of the arithmetic unit and the instruction control unit for performing the address translation is described in detail with reference to FIG. 7. As depicted in FIG. 7, the micro TLB stores therein a TLB virtual address [63:13], from 63 bit to 13 bit, and a context value [12:0], from 12 bit to 0 bit. The arithmetic unit and the instruction control unit output the TLB access to the micro TLB as an address-translation request. The TLB access includes a virtual address [63:13] and an effective context ID [1:0], from 1 bit to 0 bit. Upon receiving the TLB access, the micro TLB obtains a context value [12:0], from 12 bit to 0 bit, corresponding to a 2 bit effective context ID. An address comparing unit in the micro TLB outputs a result of comparison between the TLB virtual address [63:13] and the input virtual address [63:13] to an AND circuit. Then a context comparing unit outputs, to the AND circuit, a result of comparison between the TLB context [12:0] and the input-converted context value [12:0] and further a result of determination as to whether the global bit is appended to the context.

When receiving from the address comparing unit a signal indicating matching, receiving from the context comparing unit a signal indicating matching or a signal indicating GLOBAL-BIT (global bit), and receiving from an ENTRY-VALID a signal indicating that the entry corresponding to the input virtual address input is valid, then the AND circuit responds with a physical address corresponding to the virtual address as ENTRY-MATCH. In contrast, when receiving from the address comparing unit a signal indicating non-matching, receiving from the context comparing unit a signal indicating non-matching, or receiving a signal indicating that the entry corresponding to the input virtual address is invalid, then the AND circuit responds with a micro TLB miss.

Furthermore, because of recent increasingly accelerated performance of processors, there is a demand to also accelerate the address translation in the frequently accessed micro TLB. In view of the above, shared context (Shared-Context: Shared bit) that allows a context to be used among different processes is adopted (see Patent Document 1). With adoption of the shared context, if a context is matched with one of a context register or a shared context register, virtual addresses can be translated into physical addresses as a context match.

Patent Document 1: Japanese Laid-open Patent Publication No. H5-225064

### DISCLOSURE OF INVENTION

### PROBLEM TO BE SOLVED BY THE INVENTION

However, with the conventional technology described above, speed for processing address search slows down, which results in worse performance. In detail, the context and the shared context each preferably need comparison units and this addition of comparison units leads to an increase in the number of compared BITs and slows down the speed of processing address search. As a result, performance of computers declines.

The present invention is made in view of the above-mentioned problems with the conventional technology. An object of the invention is to provide an arithmetic processing apparatus, a TLB control method, a TLB control program, and an information processing apparatus with which performance can be improved by reducing the number of bits used for address search, and performance can be improved even when the shared context is used.

### MEANS FOR SOLVING PROBLEM

To solve the problems described above and achieve the object, the invention set forth in claim 1 includes a main TLB that stores therein, as a page table, a plurality of entries indicating correspondences between virtual addresses and physical addresses; a micro TLB that stores therein a part of the page table stored in the main TLB in association with a context ID specifying a context included in an address-translation request output from an arithmetic unit, the address-translation request being a request for translating a virtual address into a physical address; a search unit that does not translate, upon receiving the address-translation request, a context ID included in the address-translation request into a context value specifying the context but searches the micro TLB for an entry matching a virtual address and a context ID included in the address-translation request; and an address responding unit that responds, when an entry is searched for and found by the search unit, with a physical address included in the entry to the arithmetic unit, and transmits, when an entry is searched for and not found by the search unit, an address-translation request to the main TLB.

In the invention set forth in claim 2, the micro TLB associates together the physical address, a virtual address, and a 2-bit context ID indicating primary, secondary, or nucleus as a context ID, and stores therein those associated together as an entry, and the search unit does not translate, upon receiving the address-translation request, the context ID included in the address-translation request into a context value specifying the context but searches for an entry matching the virtual address and the context ID included in the address-translation request.

In the invention set forth in claim 3, the arithmetic processing apparatus adopts a multi-thread method in which a plurality of threads is simultaneously activated, the micro TLB associates together the physical address, a virtual address, a context ID, and thread information indicating a thread in which the physical address is used, and stores those associated together as an entry, and the search unit does not translate, upon receiving the address-translation request, the context ID included in the address-translation request into a context value specifying the context but searches the micro TLB for an entry matching the virtual address, the context ID and the thread information included in the address-translation request.

The invention set forth in claim 4 includes a main TLB that stores therein, as a page table, a plurality of entries indicating correspondences between virtual addresses and physical addresses; a micro TLB that stores therein a part of the page table stored in the main TLB in association with a context ID specifying a context included in an address-translation request output from an arithmetic unit, the address-translation request being a request for translating a virtual address into a physical address; a searching step of not translating, upon receiving the address-translation request, a context ID included in the address-translation request into a context value specifying the context but searching the micro TLB for an entry matching a virtual address and a context ID included in the address-translation request; and an address responding step of responding, when an entry is searched for and found at the searching step, with a physical address included in the entry to the arithmetic unit, and transmitting, when an entry is searched for and not found at the searching step, an address-translation request to the main TLB.

In the invention set forth in claim 5, the micro TLB associates together the physical address, a virtual address, and a 2-bit context ID indicating primary, secondary, or nucleus as a context ID, and stores therein those associated together as an entry, and the searching step includes not translating, upon receiving the address-translation request, the context ID included in the address-translation request into a context value specifying the context but searching for an entry matching the virtual address and the context ID included in the address-translation request.

In the invention set forth in claim 6, the TLB control method is suitable for an arithmetic processing apparatus that adopts a multi-thread method in which a plurality of threads is simultaneously activated, the micro TLB associates together the physical address, a virtual address, a context ID, and thread information indicating a thread in which the physical address is used, and stores those associated together as an entry, and the searching step includes not translating, upon receiving the address-translation request, the context ID included in the address-translation request into a context value specifying the context but searching the micro TLB for an entry matching the virtual address, the context ID and the thread information included in the address-translation request.

The invention set forth in claim 7 causes a computer to execute: a main TLB that stores therein, as a page table, a plurality of entries indicating correspondences between virtual addresses and physical addresses; a micro TLB that stores therein a part of the page table stored in the main TLB in association with a context ID specifying a context included in an address-translation request output from an arithmetic unit, the address-translation request being a request for translating a virtual address into a physical address; a searching step of not translating, upon receiving the address-translation request, a context ID included in the address-translation request into a context value specifying the context but searching the micro TLB for an entry matching a virtual address and a context ID included in the address-translation request; and an address responding step of responding, when an entry is searched for and found at the searching step, with a physical address included in the entry to the arithmetic unit, and transmitting, when an entry is searched for and not found at the searching step, an address-translation request to the main TLB.

In the invention set forth in claim 8, the micro TLB associates together the physical address, a virtual address, and a 2-bit context ID indicating primary, secondary, or nucleus as a context ID, and stores therein those associated together as an entry, and the searching step includes not translating, upon receiving the address-translation request, the context ID included in the address-translation request into a context value specifying the context but searching for an entry matching the virtual address and the context ID included in the address-translation request.

In the invention set forth in claim 9, the computer in which the TLB control program is executed is an arithmetic processing apparatus that adopts a multi-thread method in which a plurality of threads is simultaneously activated, the micro TLB associates together the physical address, a virtual address, a context ID, and thread information indicating a thread in which the physical address is used, and stores those associated together as an entry, and the searching step includes not translating, upon receiving the address-translation request, the context ID included in the address-translation request into a context value specifying the context but searching the micro TLB for an entry matching the virtual address, the context ID and the thread information included in the address-translation request.

The invention set forth in claim 10 includes an arithmetic unit; a storage unit that is connected to the arithmetic unit and can store therein information; a main TLB that stores therein entries that are used for accessing the storage unit and indicate correspondences between virtual addresses and physical addresses; a micro TLB that stores therein a part of the entries stored in the main TLB in association with an effective context ID specifying an effective context; a data obtaining unit that obtains, from the entries stored in the micro TLB or in the main TLB, a physical address corresponding to an address-translation request output from the arithmetic unit, the address-translation request being a request for a translation of a virtual address into a physical address; a search unit that searches, according to the address-translation request, the micro TLB for an entry storing information matching the virtual address and the effective context ID included in the address-translation request; and an address responding unit that responds, when the entry is searched for and found in the micro TLB by the search unit, with a physical address included in the searched entry to the arithmetic unit and that responds, when the entry is searched for and not found in the micro TLB by the search unit, with an address-translation request to the main TLB.

In the invention set forth in claim 11, the information processing apparatus further includes a registration unit that associates together, when the entry is searched for and not found in the micro TLB by the search unit, a physical address corresponding to the address-translation request stored in the main TLB, a virtual address associated with the physical address, and an effective context ID included in the address-translation request and registers those associated together in the micro TLB.

### EFFECT OF THE INVENTION

According to the present invention, a plurality of entries indicating correspondences between virtual addresses and physical addresses is stored as a page table. A part of the stored page table is associated with a context ID specifying a context included in an address-translation request, which is output from the arithmetic unit, for requesting translation of the virtual address into the physical address, and is stored as an entry. When the address-translation request is received, the context ID included in the address-translation request is not translated into a context value specifying a context but an entry matching the virtual address and the context ID included in the address-translation request is searched for. When the entry is searched for and found, the physical address included in the entry is transmitted to the arithmetic unit as a response. When the entry is searched for and not found, the address-translation request is transmitted to the main TLB. Therefore, the number of bits used for an address search can be reduced and performance can be improved. Furthermore, performance can be improved even when a shared context is used.

For example, because an effective context ID (context ID) used for an access-translation request (TLB access) to the TLB is registered in the micro TLB and the search can be performed, performance can be improved compared with a case in which a 13bit context value is used. Furthermore, because the effective context ID is used, logical circuits for searching for the shared context are not always needed even when the shared context is used. As a result, the effective context ID can be compared with use of only one logical circuit, and therefore performance can be improved even when the shared context is used. The effective context ID is an identifier of an effective context allotted to each process. The shared context/common context is an identifier of a context allotted commonly among a plurality of processes.

Furthermore, according to the present invention, the micro TLB associates the physical address, the virtual address, and the 2-bit context ID indicating primary, secondary, or nucleus as a context ID, together, and stores these as an entry. When receiving the address-translation request, the context ID included in the address-translation request is not translated into the context value specifying the context but the entry matching the virtual address and the context ID included in the address-translation request is searched for. As a result, the number of bits used for comparison in search can be further reduced, and therefore performance can be further improved.

For example, because the 2-bit effective context ID used for the access-translation request (TLB access) to the TLB is registered in the micro TLB and the search can be performed, what may be needed is to perform a 2-bit comparison. Therefore, performance can be improved compared with a case in which a 13-bit context value is used.

Furthermore, according to the present invention, the arithmetic processing apparatus adopts a multi-thread method in which a plurality of threads is simultaneously activated. The micro TLB associates the physical address, the virtual address, the context ID, and the thread information indicating a thread in which the physical address is used, together, and stores these as an entry. When the address-translation request is received, the context ID included in the address-translation request is not translated in to the context value specifying the context but the entry matching the virtual address, the context ID, and the thread information included in the address-translation request is searched for in the micro TLB. Therefore, performance can be further improved even when the multi-thread method is adopted.

### BRIEF DESCRIPTION OF DRAWINGS

FIG. 1 is a diagram illustrating an outline and features of an arithmetic processing apparatus in accordance with a first embodiment.
FIG. 2 is a block diagram illustrating a configuration of an arithmetic processing apparatus in accordance with the first embodiment.
FIG. 3 is a diagram illustrating an example of information registered in a micro TLB.
FIG. 4 is a diagram illustrating a circuit configuration of a micro TLB in an arithmetic processing apparatus in accordance with the first embodiment.
FIG. 5 is a flowchart illustrating a flow of processes for registering entries in the micro TLB in the arithmetic processing apparatus in accordance with the first embodiment.
FIG. 6 is a flowchart illustrating a flow of processes for registering entries in the micro TLB in the arithmetic processing apparatus in accordance with the first embodiment.
FIG. 7 is a diagram illustrating conventional technology.

### EXPLANATIONS OF LETTERS OR NUMERALS

- 10: Arithmetic processing apparatus
- 11: CPU
- 11a: Arithmetic unit/instruction control unit
- 20: L1-cache control unit
- 21: L1-cache RAM
- 22: Main TLB
- 23: Micro TLB
- 24: Storage unit
- 25: Registration unit
- 26: Address comparing unit
- 27: Context ID comparing unit
- 28: Thread comparing unit
- 29: Address responding unit
- 30: L2-cache control unit
- 31: L2-cache RAM
- 40: Main storage unit (memory)

### BEST MODE(S) FOR CARRYING OUT THE INVENTION

Preferred embodiments of an arithmetic processing apparatus, a TLB control method, and a TLB control program in accordance with the present embodiment are described in detail with reference to the accompanying drawings. The description below describes first an outline and features of the arithmetic processing apparatus in accordance with the present embodiment, second, a configuration and a flow of processes of the arithmetic processing apparatus, and, at last, several variations of the present embodiment.
First Embodiment

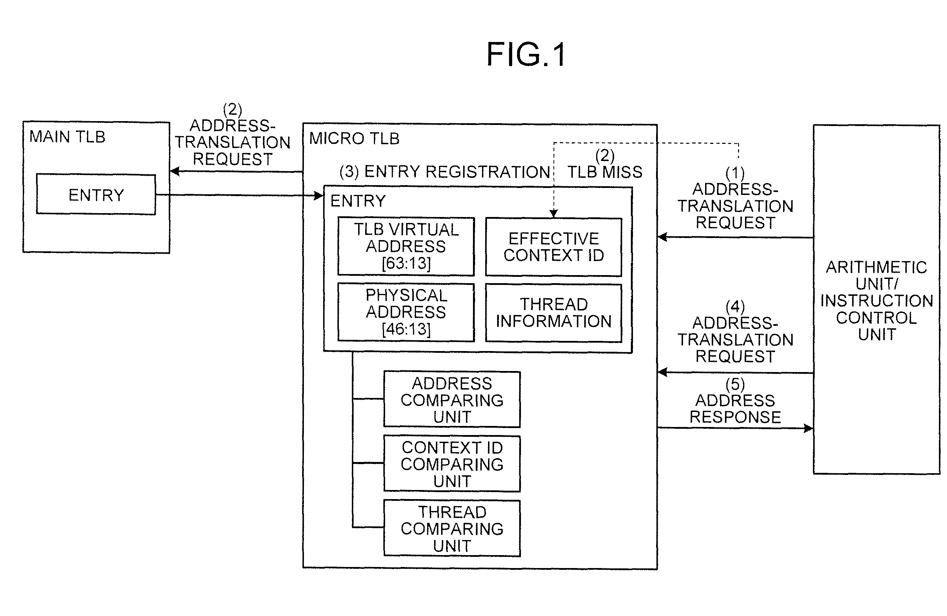

First, an outline and features of the arithmetic processing apparatus in accordance with the first embodiment are described with reference to FIG. 1. FIG. 1 is a diagram illustrating an outline and features of the arithmetic processing apparatus in accordance with the first embodiment.

As depicted in FIG. 1, the arithmetic processing apparatus includes a main TLB that stores therein a plurality of entries indicating correspondences between virtual addresses and physical addresses as a page table, and a micro TLB that stores therein a part of the page table stored in the main TLB. Furthermore, an arithmetic unit/instruction control unit connected to the micro TLB transmits an address-translation request, which requests translation of a virtual address into a physical address, to the micro TLB. When no entry in the micro TLB corresponds to the address-translation request (i.e., a micro TLB miss), the arithmetic unit/instruction control unit transmits, from the main TLB, an address-translation request to the micro TLB again after the registration in the micro TLB. The arithmetic processing apparatus adopts a multi-thread method with which a plurality of threads is activated simultaneously.

As an outline, the arithmetic processing apparatus in such a configuration obtains, from entries stored in the micro TLB or the main TLB, a physical address corresponding to the address-translation request, which is output from processors such as the arithmetic unit/instruction control unit and requests translation from virtual addresses into physical addresses. Then, the arithmetic processing apparatus gives out a response to processors. Particularly, the arithmetic processing apparatus in accordance with the present embodiment is mainly characterized by features that the number of bits used for address search is reduced and performance can be improved and that performance can be improved when a shared context is used.

Such characteristic features are described in detail. Suppose that an address-translation request (TLB access) is input from the arithmetic unit/instruction control unit to the micro TLB and a micro TLB miss occurs. Then, the arithmetic processing apparatus associates a physical address that is a response and is stored in the main TLB, a virtual address associated with the physical address, an effective context ID included in the address-translation request, and thread information indicating a thread in which the physical address is used, together, and registers these as an entry in the micro TLB (see (1) to (3) in FIG. 1). Specifically speaking, the arithmetic processing apparatus associates a physical address [46:13] that is a response and is stored in the main TLB, a TLB virtual address [63:13] associated with the physical address, an effective context ID [1:0] that is included in the address-translation request at the TLB access and indicates primary, secondary, or nucleus, thread information indicating a thread in which the physical address is used, together, and the arithmetic processing apparatus then stores these as an entry in the micro TLB.

For example, the arithmetic processing apparatus associates together "0x000111...", indicated by a physical address [46:13] that is a response and is stored in the main TLB; "1x123456..." indicated by a TLB virtual address [63:13] that is associated with the physical address; "10", indicated by an effective context ID [1:0] that is included in the address-translation request at the TLB access and indicates primary, secondary, or nucleus; and thread information THREAD1, indicating a thread in which the physical address is used, and the arithmetic processing apparatus stores these as an entry in the micro TLB. Therefore, it is not always needed to maintain a shared context.

Then, when receiving an address-translation request from the arithmetic unit or the like, the arithmetic processing apparatus does not translate the effective context ID included in the address-translation request into a context value specifying a context but searches the micro TLB for an entry matching the virtual address, the effective context ID, and the thread information included in the address-translation request (see (4) in FIG. 1). A specific description according to the above-mentioned example is the arithmetic processing apparatus, upon receiving an address-translation request from the arithmetic unit or the like again, does not translate the effective context ID [1:0] included in the address-translation request into the context value [12:0] but searches the micro TLB for an entry matching the TLB virtual address [63:13], the effective context ID [1:0], and the thread information included in the address-translation request.

For example, when receiving "1x123456..." indicated by the TLB virtual address [63:13], the effective context ID "10", and the thread information THREAD1 that are included in the address-translation request, the arithmetic processing apparatus searches the micro TLB for an entry matching these.

When the entry is searched for and found in the micro TLB, the arithmetic processing apparatus responds with a physical address included in the entry. When the entry is searched for and not found in the micro TLB, the arithmetic processing apparatus transmits the address-translation request to the main TLB (see (5) in FIG. 1).
To give a specific description according to the above-mentioned example, the arithmetic processing apparatus, when the entry is searched for and found in the micro TLB, responds with a physical address "0x000111..." that is stored in association with "1x123456..." indicated by the TLB virtual address [63:13] and the thread information THREAD1. When the entry is searched for and not found in the micro TLB, transmits the address-translation request to the main TLB.

As described above, the arithmetic processing apparatus in accordance with the first embodiment can search for an entry registered in the micro TLB with use of the 2bit effective context ID [1:0] instead of a 13-bit context [12:0], and it is not always necessary to compare the shared context. The main features described above are that the number of bits used for an address search can be reduced and the performance can be improved. Furthermore, performance can be improved even when the shared context is used.

### Configuration of Arithmetic Processing Apparatus

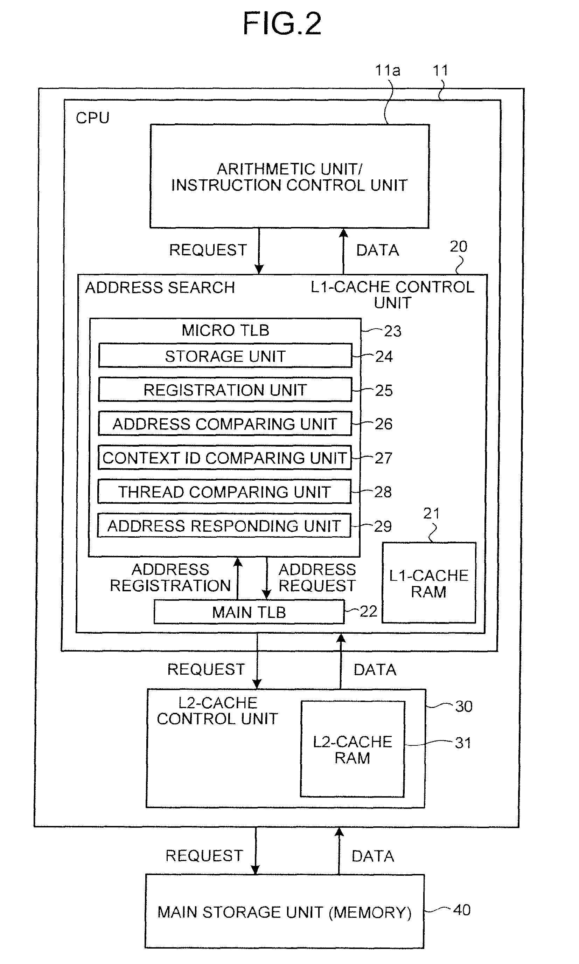

A configuration of the arithmetic processing apparatus depicted in FIG. 1 is described below with reference to FIG. 2. FIG. 2 is a block diagram illustrating a configuration of the arithmetic processing apparatus in accordance with the first embodiment. As depicted in FIG. 2, an arithmetic processing apparatus 10 includes a CPU 11, an L1-cache control unit 20, an L2-cache control unit 30, and a main storage unit 40.

The CPU 11 is a processor for executing various kinds of programs stored in the main storage unit 40. Particularly in relation with the present embodiment, the CPU 11 includes an arithmetic unit/instruction control unit 11a and the L1-cache control unit 20.

The arithmetic unit/instruction control unit 11a outputs, according to arithmetic processes executed by the CPU 11, instructions for writing or reading of data, obtains corresponding data from a micro TLB 23, a main TLB 22, an L1-cache RAM 21, an L2-cache RAM 31, and the main storage unit 40 described later, and performs arithmetic processes on the obtained data.

When a virtual address is obtained from the arithmetic unit/instruction control unit 11a, the L1-cache control unit 20 obtains corresponding data from the L1-cache RAM 21 and outputs the data to the arithmetic unit/instruction control unit 11a. When the corresponding data does not exist in the L1-cache RAM 21, the L1-cache control unit 20 outputs an L2-cache address access to the L2-cache control unit 30. Particularly in relation with the present embodiment, the L1-cache control unit 20 includes the L1-cache RAM 21, the main TLB 22, and the micro TLB 23.

The L1-cache RAM 21 is a high-speed low-capacity memory integrated or implemented on the same module as the CPU 11. The L1-cache RAM 21 stores therein frequently used data and is used for temporarily storing instructions and data executed by the CPU 11. While the main storage unit 40 cannot provide new data yet, the L1-cache RAM 21 provides data to some extent so that the CPU 11 can continuously perform processes.

The main TLB 22 stores, as a page table, a plurality of entries indicating correspondences between physical addresses and virtual addresses allocated in the main memory. A specific example is when the address-translation request is transmitted from the arithmetic unit/instruction control unit 11a to the micro TLB 23 and a micro TLB miss occurs, the main TLB 22, receiving the address-translation request from the micro TLB 23, responds with a physical address as a response for the address-translation request. Furthermore, when the physical address corresponding to the address-translation request from the micro TLB is not stored in the main TLB 22, the main TLB 22 outputs the address-translation request to the main storage unit 40.

The micro TLB 23 stores therein a part of the page table stored in the main TLB. Particularly in relation with the present embodiment, particularly, the micro TLB 23 includes a storage unit 24, a registration unit 25, an address comparing unit 26, a context-ID comparing unit 27, a thread comparing unit 28, and an address responding unit 29.

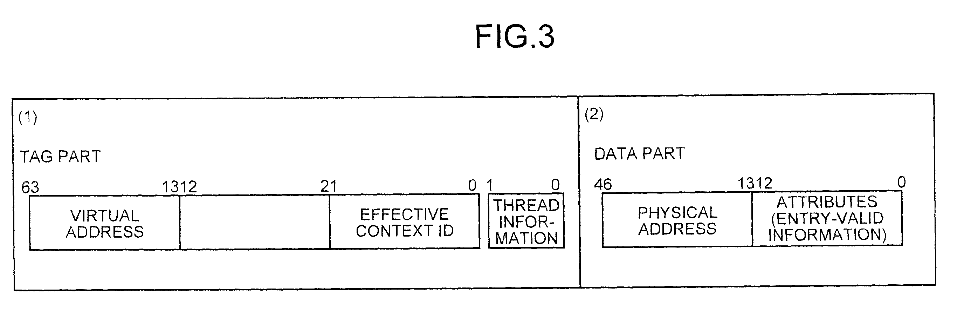

The storage unit 24 associates a physical address stored in the main TLB 22, a virtual address associated with the physical address, an effective context ID, and thread information, which are registered by the registration unit 25 described later, together, and stores these as an entry. A specific example is when the storage unit 24, as depicted in FIG. 3, associates a TAG part including the virtual address [63:13], the effective context ID [1:0], and thread information with a data part including the physical address [46:13] and the attributes (e.g., ENTRY-VALID) [12:0], and stores these therein. FIG. 3 is a diagram illustrating an example of information registered in the micro TLB.

The registration unit 25 registers the physical address stored in the main TLB 22, the virtual address associated with the physical address, the effective context ID included in the address-translation request, and the thread information, together, and registers these in the storage unit 24 in the micro TLB 23 as an entry. A specific example is when the registration unit 25 registers the physical address [46:13] that is a response from the main TLB 22 to the arithmetic unit/instruction control unit 11a, the virtual address [63:13] associated with the physical address, the effective context ID [1:0] that is included in the address-translation request at the TLB access and indicates primary, secondary, or nucleus, and the thread information indicating a thread in which the physical address is used, together, and registers these in the storage unit 24 in the micro TLB 23 as an entry. For example, the registration unit 25 registers "0x000111...", indicated by the physical address [46:13]; "1x123456...", indicated by the virtual address [63:13] associated with the physical address; "10", indicated by the effective context ID [1:0] that is included in the address-translation request at the TLB access and indicates primary, secondary, or nucleus; and the thread information THREAD1 indicating a thread in which the physical address is used, together, and registers these in the micro TLB 23 as an entry.

When receiving the address-translation request from the arithmetic unit/instruction control unit 11a, the address comparing unit 26 searches for an entry matching the TLB virtual address included in the address-translation request in entries stored in the storage unit 24 in the micro TLB 23. To give a specific example, when receiving the address-translation request from the arithmetic unit/instruction control unit 11a, the address comparing unit 26 refers to the TLB virtual addresses [63:13] in entries stored in the storage unit 24 in the micro TLB 23 and searches for an entry that includes the virtual address matching the virtual address [63:13] included in the address-translation request. When the matching entry is found, the address comparing unit 26 transmits a signal indicating so (e.g., matched entry information) to the address responding unit 29 described later. When the matching entry is not found, the address comparing unit 26 transmits a signal indicating so (e.g., micro TLB miss) to the address responding unit 29 described later.

When receiving the address-translation request from the arithmetic unit/instruction control unit 11a, the context ID comparing unit 27 searches for an entry that includes the effective context ID matching the effective context ID included in the address-translation request, from entries stored in the storage unit 24 in the micro TLB 23. A specific example is when receiving the address-translation request from the arithmetic unit/instruction control unit 11a, the context ID comparing unit 27 does not translate the effective context ID [1:0] included in the address-translation request into the context value [12:0] specifying a context but refers to the TLB effective context ID [1:0] of entries stored in the storage unit 24 in the micro TLB 23 and searches for the entry including the effective context ID matching the effective context ID [1:0]. When the matching entry is found, the context ID comparing unit 27 transmits, similarly to the address comparing unit 26, a signal indicating so (e.g., matched entry information) to the address responding unit 29 described later. When the matching entry is not found, the address responding unit 29 transmits a signal indicating so (e.g., micro TLB miss) to the address responding unit 29.

When receiving the address-translation request from the arithmetic unit/instruction control unit 11a, the thread comparing unit 28 searches for an entry that includes the thread information matching the thread information included in the address-translation request, from entries stored in the storage unit 24 in the micro TLB 23. To give a specific example, when receiving the address-translation request from the arithmetic unit/instruction control unit 11a, the thread comparing unit 28 refers to the TLB thread information of entries stored in the storage unit 24 in the micro TLB 23 and searches for an entry that includes the thread information matching the thread information included in the address-translation request. When the matching entry is found, the address comparing unit 26 transmits a signal indicating so (e.g., matching entry information) to the address responding unit 29 described later. When the matching entry is not found, the address comparing unit 26 transmits a signal indicating so (e.g., micro TLB miss) to the address responding unit 29 described later.

When the entry corresponding to the address-translation request is searched for and found in the micro TLB 23, the address responding unit 29 responds to the processor with the physical address included in the entry. When the entry is searched for and not found, the address responding unit 29 transmits the address-translation request to the main TLB 22. To give a specific example with reference to the above example, when entry information matching the virtual address of the address-translation request received from the address comparing unit 26, entry information matching the effective context ID of the address-translation request received from the context ID comparing unit 27, and entry information matching the thread information of the address-translation request received from the thread-information comparing unit 28 are the same as each other, then the address responding unit 29 obtains the physical address [46:13] corresponding to the received entry from the storage unit 24 in the micro TLB 23 and responds with the same to the arithmetic unit/instruction control unit 11a, which has transmitted the address-translation request.

When entry information matching the virtual address of the address-translation request received from the address comparing unit 26, entry information matching the effective context ID of the address-translation request received from the context ID comparing unit 27, and entry information matching the thread information of the address-translation request received from the thread comparing unit 28 are not the same as each other, or, when a signal indicating that there is no information matching the input address-translation request (e.g., indicating that a micro TLB miss occurs) is received from the address comparing unit 26, the context ID comparing unit 27, or the thread-information unit 28, then the address responding unit 29 responds with the address-translation request transmitted from the arithmetic unit/instruction control unit 11a to the main TLB 22.

The L2-cache control unit 30 includes the L2-cache RAM 31. When receiving the L2-cache access address from the L1-cache control unit 20, the L2-cache control unit 30 reads data, corresponding to the obtained L2-cache access address, from the L2-cache RAM 31 and outputs the data to the L1-cache control unit 20. The L2-cache RAM 31 is a memory with higher speed and a larger capacity than the L1-cache RAM 21 and with a smaller capacity than the main storage unit. The L2-cache RAM 31 stores therein frequently used data.

The main storage unit 40 is a large-capacity main memory that stores therein data used by the CPU 11, and a translation table (i.e., page table) for translating instructions or virtual addresses into physical addresses. When there is a request from the arithmetic unit/instruction control unit 11a, the L1-cache control unit 20, or the L2-cache control unit 30 in the CPU 11, the main storage unit 40 responds with corresponding data to the requesting processor.

### Circuit Configuration of Micro TLB in Arithmetic Processing Apparatus

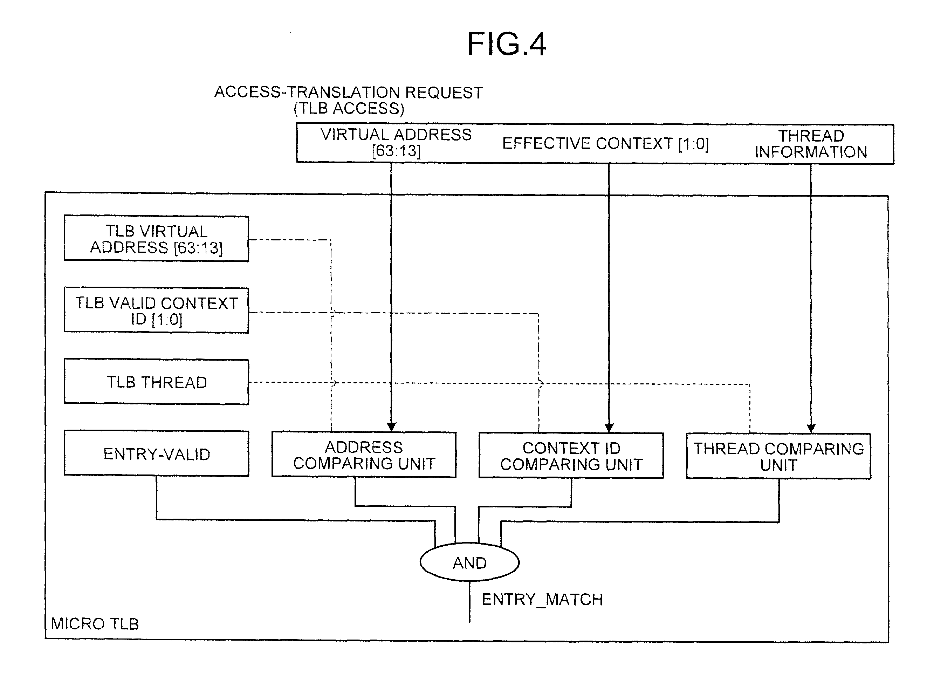

A circuit configuration of the micro TLB in the arithmetic processing apparatus is described with reference to FIG. 4. FIG. 4 is a diagram illustrating a circuit configuration of the arithmetic processing apparatus in accordance with the first embodiment.

As depicted in FIG. 4, when the access-translation request (TLB access) is input from the arithmetic unit/instruction control unit 11a to the micro TLB 23, the virtual address [63:13] included in the access-translation request is input to the address comparing unit 26, the effective context ID [1:0] included in the access-translation request is input to the context ID comparing unit 27, and the thread information included in the access-translation request is input to the thread comparing unit 28. The address comparing unit 26 refers to the TLB virtual address [63:13] stored in the storage unit 24, searches for the virtual address matching the input virtual address [63:13], and outputs the result to the AND circuit (the address responding unit 29).

Similarly to the above description, the context ID comparing unit 27 refers to the TLB effective context ID stored in the storage unit 24, searches for the effective context ID matching the input effective context ID [1:0], and outputs the result to the AND circuit (the address responding unit 29). The thread comparing unit 28 refers to the thread information stored in the storage unit 24, searches for the thread information matching the input thread information, and outputs the result to the AND circuit (the address responding unit 29).

When the entry input from the address comparing unit 26, the entry input from the context ID comparing unit 27, and the entry input from the thread comparing unit 28 are the same as each other and further when a signal indicating that the entry is "valid" is received from ENTRY-VALID, the AND circuit responds with the physical address included in the entry. When the entry input from the address comparing unit 26, the entry input from the context ID comparing unit 27, and the entry input from the thread comparing unit 28 are not the same as each other or when the matching entry is searched for and not found or when the matching entry is "invalid", then the AND circuit outputs the address-translation request to the main TLB 22.

### Processes by the Arithmetic Processing Apparatus

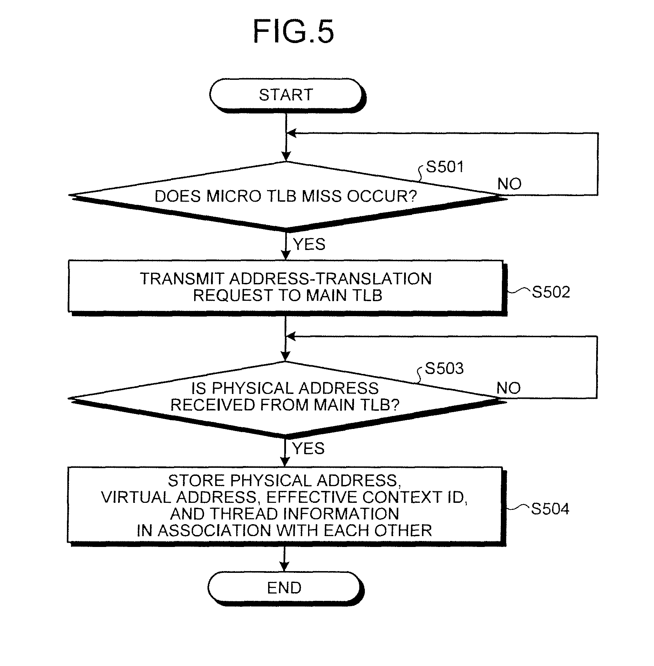

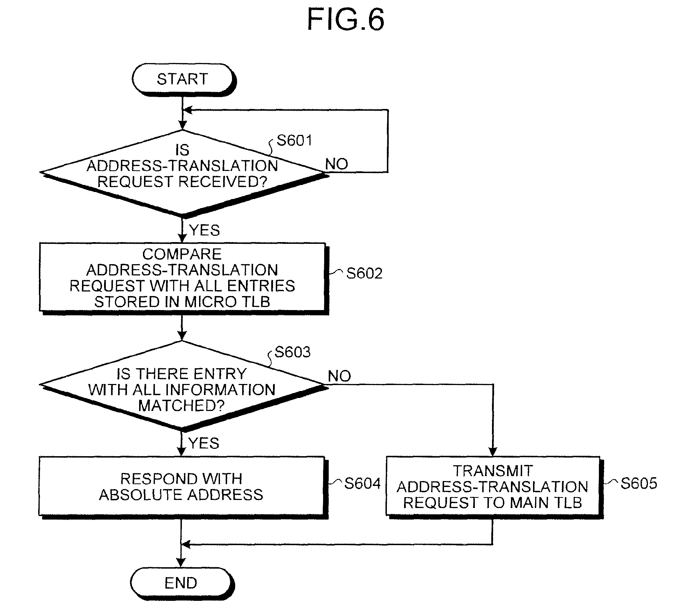

Processes by the arithmetic processing apparatus are described with reference to FIGS. 5 and 6. FIG. 5 is a flowchart illustrating a flow of processes for registering entries in the micro TLB in the arithmetic processing apparatus in accordance with the first embodiment. FIG. 6 is a flowchart illustrating a flow of processes for registering entries in the micro TLB in the arithmetic processing apparatus in accordance with the first embodiment.

### Entry Registration Processes

As depicted in FIG. 5, when the micro TLB occurs for the address-translation request input from the arithmetic unit/instruction control unit 11a (Step S501: Yes), the address responding unit 29 in the micro TLB 23 transmits the address-translation request input from the arithmetic unit/instruction control unit 11a to the main TLB (Step S502).

When the physical address is transmitted from the main TLB 22 to the arithmetic unit/instruction control unit 11a as a response to the input address-translation request and the physical address, a response to the address-translation request, is input to the micro TLB 23 (Step S503: Yes), then the registration unit 25 in the micro TLB 23 associates the input physical address, the virtual address, the effective context ID, and the thread information, together and stores these in the storage unit 24 (Step S504).

### Entry Search Processes

As depicted in FIG. 6, when the address-translation request is received from the arithmetic unit/instruction control unit 11a (Step S601: Yes), the micro TLB 23 does not translate the 2-bit effective context ID included in the address-translation request into the 13-bit context value specifying the context but searches for the entry with matching "virtual address, effective context ID, and thread information" included in the address-translation request from the storage unit 24 in the micro TLB 23 (Step 5602).

When the completely matching entry is searched for and found (Step S603: Yes) and further when the entry is "valid", the micro TLB 23 obtains the physical address [46:13] included in the entry and responds with the same to the arithmetic unit/instruction control unit 11a (Step 5604).

When the completely matching entry is searched for and not found (Step S603: No) or when the entry is not "valid", the micro TLB 23 transmits the address-translation request input from the arithmetic unit/instruction control unit 11a to the main TLB 22 (Step S605).

### Effects of First Embodiment

As described above, according to the first embodiment the main TLB stores therein, as a page table, a plurality of entries indicating correspondences between virtual addresses and physical addresses, and the micro TLB associates a part of the page table, which is stored in the main TLB, with a context ID specifying a context included in an address-translation request, which is output from the arithmetic unit, for requesting translation of the virtual address into the physical address and stores these as an entry. When the address-translation request is received, the context ID included in the address-translation request is not translated into a context value specifying a context but an entry matching the virtual address and the context ID included in the address-translation request is searched for. When the entry is searched for and found, the physical address included in the entry is transmitted to the arithmetic unit as a response. When the entry is searched for and not found, the address-translation request is transmitted to the main TLB. Therefore, the number of bits used for an address search can be reduced and performance can be improved. Furthermore, performance can be improved even when a shared context is used.

For example, because the effective context ID used for the access-translation request (TLB access) to the TLB is registered in the micro TLB and the search can be performed, performance can be improved compared with a case in which a 13-bit context value is used. Furthermore, because the effective context ID is used, logical circuits for searching for the shared context are not always needed even when the shared context is used. As a result, the effective context ID can be compared with use of only one logical circuit, and therefore performance can be improved even when the shared context is used.

Furthermore, according to the first embodiment, the micro TLB associates the physical address, the virtual address, and the 2-bit context ID indicating primary, secondary, or nucleus as a context ID, together, and stores these as an entry. When receiving the address-translation request, the context ID included in the address-translation request is not translated into the context value specifying the context but the entry matching the virtual address and the context ID included in the address-translation request is searched for. As a result, the number of bits used for comparison in search can be further reduced, and therefore performance can be further improved.

For example, because the 2-bit effective context ID used for the access-translation request (TLB access) to the TLB is registered in the micro TLB and the search can be performed, what may be needed is to perform a 2-bit comparison. Therefore, performance can be improved compared with a case in which a 13-bit context value is used.

Furthermore, according to the first embodiment, the arithmetic processing apparatus adopts a multi-thread method in which a plurality of threads is simultaneously activated. The micro TLB associates the physical address, the virtual address, the context ID, and the thread information indicating a thread in which the physical address is used, together, and stores these as an entry. When the address-translation request is received, the context ID included in the address-translation request is not translated in to the context value specifying the context but the entry matching the virtual address, the context ID, and the thread information included in the address-translation request is searched for in the micro TLB. Therefore, performance can be further improved even when the multi-thread method is adopted.

### Second Embodiment

Although the above embodiment is described, the present embodiments can be applied as various different embodiments from the above-mentioned embodiment. The following describes different embodiments in categories as follows: (1) Application in Single-thread Method, and (2) System Configurations and Others.

### (1) Application in Single-thread method

For example, in the first embodiment, the arithmetic processing apparatus that adopts a multi-thread method is described as an example. The present embodiment is not limited to this and can be applied to an arithmetic processing apparatus that adopts a single-thread method.
In this case, the present embodiment can be applied to the arithmetic processing apparatus that adopts a single-thread method in a manner such that the configuration does not include the thread comparing unit described in the first embodiment or that a value output from the thread comparing unit is not used.

### (2) System Configurations and Others

Furthermore, all or some of the processes described in the present embodiment as automatic processes (e.g., a process for outputting the entry including the physical address from the main storage unit) may be performed manually. Furthermore, procedures, control procedures, specific names, and information including various data and parameters, which are described in the above description or the drawings, may be arbitrarily modified except as otherwise provided.

Furthermore, the components of the apparatuses illustrated in the drawings are merely functional concepts, and the physical configurations of these components are not necessarily the same as those illustrated. Therefore, specific integration/disintegration of the apparatuses is not limited to those illustrated. Depending on various load or operation statuses, all or some of the apparatuses may be functionally or physically integrated/disintegrated into an arbitrary unit (e.g., the address comparing unit and the context ID comparing unit may be integrated).

### INDUSTRIAL APPLICABILITY

As described above, the arithmetic processing apparatus, the TLB control method, the TLB control program, and the information processing apparatus include the main TLB that stores therein, as a page table, a plurality of entries indicating correspondences between virtual addresses and physical addresses, and the micro TLB that stores therein a part of the page table stored in the main TLB, and are useful for obtaining the physical address corresponding to the address-translation request, which is output from the processors and requests translation of the virtual address into the physical address, from entries stored in the micro TLB or the main TLB and for responding to the processors. Particularly, the number of bits used for an address search can be reduced and performance can be improved, and performance can be improved even when the shared context is used.

## Claims

1. An arithmetic processing apparatus, comprising:
a main TLB that stores therein, as a page table, a plurality of entries indicating correspondences between virtual addresses and physical addresses;
a micro TLB that stores therein a part of the page table stored in the main TLB in association with a context ID specifying a context included in an address-translation request output from an arithmetic unit, the address-translation request being a request for translating a virtual address into a physical address;
a search unit that does not translate, upon receiving the address-translation request, a context ID included in the address-translation request into a context value specifying the context but searches the micro TLB for an entry matching a virtual address and a context ID included in the address-translation request; and
an address responding unit that responds, when an entry is searched for and found by the search unit, with a physical address included in the entry to the arithmetic unit, and transmits, when an entry is searched for and not found by the search unit, an address-translation request to the main TLB.

2. The arithmetic processing apparatus according to claim 1, wherein
the micro TLB associates together the physical address, a virtual address, and a 2-bit context ID indicating primary, secondary, or nucleus as a context ID, and stores therein those associated together as an entry, and
the search unit does not translate, upon receiving the address-translation request, the context ID included in the address-translation request into a context value specifying the context but searches for an entry matching the virtual address and the context ID included in the address-translation request.

3. The arithmetic processing apparatus according to claim 1 or 2, wherein
the arithmetic processing apparatus adopts a multi-thread method in which a plurality of threads is simultaneously activated,
the micro TLB associates together the physical address, a virtual address, a context ID, and thread information indicating a thread in which the physical address is used, and stores those associated together as an entry, and
the search unit does not translate, upon receiving the address-translation request, the context ID included in the address-translation request into a context value specifying the context but searches the micro TLB for an entry matching the virtual address, the context ID and the thread information included in the address-translation request.

4. A TLB control method, comprising:
a main TLB that stores therein, as a page table, a plurality of entries indicating correspondences between virtual addresses and physical addresses;
a micro TLB that stores therein a part of the page table stored in the main TLB in association with a context ID specifying a context included in an address-translation request output from an arithmetic unit, the address-translation request being a request for translating a virtual address into a physical address;
a searching step of not translating, upon receiving the address-translation request, a context ID included in the address-translation request into a context value specifying the context but searching the micro TLB for an entry matching a virtual address and a context ID included in the address-translation request; and
an address responding step of responding, when an entry is searched for and found at the searching step, with a physical address included in the entry to the arithmetic unit, and transmitting, when an entry is searched for and not found at the searching step, an address-translation request to the main TLB.

5. The TLB control method according to claim 4, wherein
the micro TLB associates together the physical address, a virtual address, and a 2-bit context ID indicating primary, secondary, or nucleus as a context ID, and stores therein those associated together as an entry, and
the searching step includes not translating, upon receiving the address-translation request, the context ID included in the address-translation request into a context value specifying the context but searching for an entry matching the virtual address and the context ID included in the address-translation request.

6. The TLB control method according to claim 4 or 5, wherein
the TLB control method is suitable for an arithmetic processing apparatus that adopts a multi-thread method in which a plurality of threads is simultaneously activated,
the micro TLB associates together the physical address, a virtual address, a context ID, and thread information indicating a thread in which the physical address is used, and stores those associated together as an entry, and
the searching step includes not translating, upon receiving the address-translation request, the context ID included in the address-translation request into a context value specifying the context but searching the micro TLB for an entry matching the virtual address, the context ID and the thread information included in the address-translation request.

7. A TLB control program causing a computer to execute:
a main TLB that stores therein, as a page table, a plurality of entries indicating correspondences between virtual addresses and physical addresses;
a micro TLB that stores therein a part of the page table stored in the main TLB in association with a context ID specifying a context included in an address-translation request output from an arithmetic unit, the address-translation request being a request for translating a virtual address into a physical address;
a searching step of not translating, upon receiving the address-translation request, a context ID included in the address-translation request into a context value specifying the context but searching the micro TLB for an entry matching a virtual address and a context ID included in the address-translation request; and
an address responding step of responding, when an entry is searched for and found at the searching step, with a physical address included in the entry to the arithmetic unit, and transmitting, when an entry is searched for and not found at the searching step, an address-translation request to the main TLB.

8. The TLB control program according to claim 7, wherein
the micro TLB associates together the physical address, a virtual address, and a 2-bit context ID indicating primary, secondary, or nucleus as a context ID, and stores therein those associated together as an entry, and
the searching step includes not translating, upon receiving the address-translation request, the context ID included in the address-translation request into a context value specifying the context but searching for an entry matching the virtual address and the context ID included in the address-translation request.

9. The TLB control program according to claim 7 or 8, wherein
the computer in which the TLB control program is executed is an arithmetic processing apparatus that adopts a multi-thread method in which a plurality of threads is simultaneously activated,
the micro TLB associates together the physical address, a virtual address, a context ID, and thread information indicating a thread in which the physical address is used, and stores those associated together as an entry, and
the searching step includes not translating, upon receiving the address-translation request, the context ID included in the address-translation request into a context value specifying the context but searching the micro TLB for an entry matching the virtual address, the context ID and the thread information included in the address-translation request.

10. An information processing apparatus, comprising:
an arithmetic unit;
a storage unit that is connected to the arithmetic unit and can store therein information;
a main TLB that stores therein entries that are used for accessing the storage unit and indicate correspondences between virtual addresses and physical addresses;
a micro TLB that stores therein a part of the entries stored in the main TLB in association with an effective context ID specifying an effective context;
a data obtaining unit that obtains, from the entries stored in the micro TLB or in the main TLB, a physical address corresponding to an address-translation request output from the arithmetic unit, the address-translation request being a request for a translation of a virtual address into a physical address;
a search unit that searches, according to the address-translation request, the micro TLB for an entry storing information matching the virtual address and the effective context ID included in the address-translation request; and
an address responding unit that responds, when the entry is searched for and found in the micro TLB by the search unit, with a physical address included in the searched entry to the arithmetic unit and that responds, when the entry is searched for and not found in the micro TLB by the search unit, with an address-translation request to the main TLB.

11. An information processing apparatus according to claim 10, wherein
the information processing apparatus further includes a registration unit that associates together, when the entry is searched for and not found in the micro TLB by the search unit, a physical address corresponding to the address-translation request stored in the main TLB, a virtual address associated with the physical address, and an effective context ID included in the address-translation request and registers those associated together in the micro TLB.
